# EUROPEAN PATENT APPLICATION

(11) **EP 4 472 352 A1**
(43) Date of publication of application: **04.12.2024**
(21) Application number: 23746873.1
(22) Date of filing: 20.01.2023
(51) Int. Cl.: H05B 3/20, B60J 1/20, C03C 27/12, H05B 3/12, H05B 3/84

(54) **HEAT-GENERATING BODY, LAMINATED GLASS, AND DEFROSTER**

(30) Priority: 28.01.2022 JP 2022012421
(71) Applicant: MITSUI MINING & SMELTING CO., LTD., Tokyo 141-8584 (JP)
(72) Inventor: IIDA Hiroto, Ageo-shi, Saitama 362-0017 (JP); HOSOKAWA Makoto, Ageo-shi, Saitama 362-0017 (JP); SHIMIZU Toshiyuki, Ageo-shi, Saitama 362-0021 (JP)
(74) Representative: Potter Clarkson
(86) International application number: PCT/JP2023/001797
(87) International publication number: WO 2023/145661

(57) **Abstract**

Provided is a heating element capable of suppressing the rapid temperature rise even when the supply voltage is high. The heating element includes a resin film and heating wires provided on at least one surface of the resin film and including a copper wire, wherein copper crystal grains forming the copper wire have a cross-sectional crystal size of less than 1.5 µm.

## Description

### TECHNICAL FIELD

The present invention relates to a heating element, a laminated glass, and a defroster.

### BACKGROUND ART

Defrosters are widely used as an apparatus for preventing or removing frost, ice, fog, or the like on window glass of a vehicle such as an automobile. A defroster sends, for example, warm air free of water vapor intensively to a place to be dehumidified, thereby removing fog and ensuring visibility.

In recent years, a defroster using heating wires (electric heating wires) has been demanded for the purpose of improving heating efficiency, power saving in an electric vehicle, and the like. This type of defroster can remove fog by, for example, heating glass with heating wires sandwiched between glass sheets.

In such a defroster, it is known to use a resin film such as a polyvinyl acetal resin (for example, a polyvinyl butyral resin) having high light permeability as a glass intermediate film upon sandwiching the heating wires between the glass sheets. For example, Patent Literature 1 (JP2018-35036A) discloses a glass device for a vehicle, the device comprising a pair of glass substrates, a transparent resin intermediate film and a heating electrode sheet each sandwiched between the glass substrates, wherein a polyvinyl butyral resin is used as the transparent resin intermediate film.

A tungsten wire is generally used as a heating wire for a defroster. However, a diameter of a tungsten wire is as thick as about 30 µm, which makes fining difficult and therefore makes the visibility poor.

In order to address with such a problem, it has been proposed to use a copper pattern which enables fining as heating wires instead of tungsten wires. For example, Patent Literature 2 (JP2018-161889A) discloses a polyvinyl acetal resin film including a polyvinyl acetal resin layer, and an electrically conductive structure based on a metal foil, the electrically conductive structure disposed on the surface or inside of the polyvinyl acetal resin layer, wherein the electrically conductive structure is formed of copper or the like. In addition, Patent Literature 3 (JP2019-142763A) discloses subjecting a stacked body obtained by stacking a polyvinyl acetal resin film and a copper foil to thermocompression bonding to provide a polyvinyl acetal resin film including the copper foil bonded thereto, and then processing the copper foil bonded to the resin film to form an electrically conductive layer. Further, Patent Literature 4 (International Publication No. WO2017/090386) discloses a laminate including: a resin layer comprising a polyvinyl acetal resin; and a copper layer, wherein the copper layer is processed by a process such as a subtractive process, a semi-additive process, or a modified semi-additive process to form a wiring pattern.

### CITATION LIST

### PATENT LITERATURE

Patent Literature 1: JP2018-35036A
Patent Literature 2: JP2018-161889A
Patent Literature 3: JP2019-142763A
Patent Literature 4: WO2017/090386

### SUMMARY OF INVENTION

Current general automobiles employ a voltage of, for example, 12 V as a voltage to be supplied to electrical parts such as a defroster. On the other hand, for mild hybrid vehicles, which have become popular as environmentally friendly vehicles in Europe and other regions in recent years, a high voltage of, for example, 48 V may be employed as the supply voltage to electrical parts. When a conventional defroster is applied to such a vehicle in which the supply voltage is high, there is a concern that the temperature of the defroster may rapidly rise to cause a defect.

The present inventors have now found that in a heating element comprising a copper wire, controlling the cross-sectional crystal size of copper crystal grains forming the copper wire to less than 1.5 µm makes it possible to suppress the rapid temperature rise even when the supply voltage is high.

Therefore, it is an object of the present invention to provide a heating element capable of suppressing the rapid temperature rise even when the supply voltage is high.

The present invention provides the following aspects:

### [Aspect 1]

A heating element comprising:
a resin film; and
heating wires provided on at least one surface of the resin film and comprising a copper wire,
wherein copper crystal grains forming the copper wire have a cross-sectional crystal size of less than 1.5 µm.

### [Aspect 2]

The heating element according to aspect 1, wherein each of the heating wires has a thickness of 70 µm or less.

### [Aspect 3]

The heating element according to aspect 1 or 2, wherein each of the heating wires has a line width of 1 µm or more and 30 µm or less.

### [Aspect 4]

The heating element according to any one of aspects 1 to 3, wherein the heating wires are provided into at least one pattern selected from the group consisting of linear-shaped, wavy line-shaped, lattice-shaped, and net-shaped patterns.

### [Aspect 5]

The heating element according to any one of aspects 1 to 4, wherein the resin film has a thickness of 1 µm or more and 1,000 µm or less.

### [Aspect 6]

The heating element according to any one of aspects 1 to 5, wherein the resin film comprises a polyvinyl acetal resin.

### [Aspect 7]

The heating element according to aspect 6, wherein the polyvinyl acetal resin is a polyvinyl butyral resin.

### [Aspect 8]

The heating element according to any one of aspects 1 to 7, further comprising an additional resin film, wherein the heating wires are sandwiched between the additional resin film and the resin film.

### [Aspect 9]

A laminated glass comprising:
a pair of glass sheets; and
the heating element according to any one of aspects 1 to 8 sandwiched between the pair of glass sheets.

### [Aspect 10]

A defroster comprising:
the laminated glass according to aspect 9; and
a voltage supply unit connected to the laminated glass and capable of applying voltage to the heating element.

### [Aspect 11]

The defroster according to aspect 10, to be used for a vehicle in which a supply voltage to electrical parts is 24 V or more.

### BRIEF DESCRIPTION OF DRAWINGS

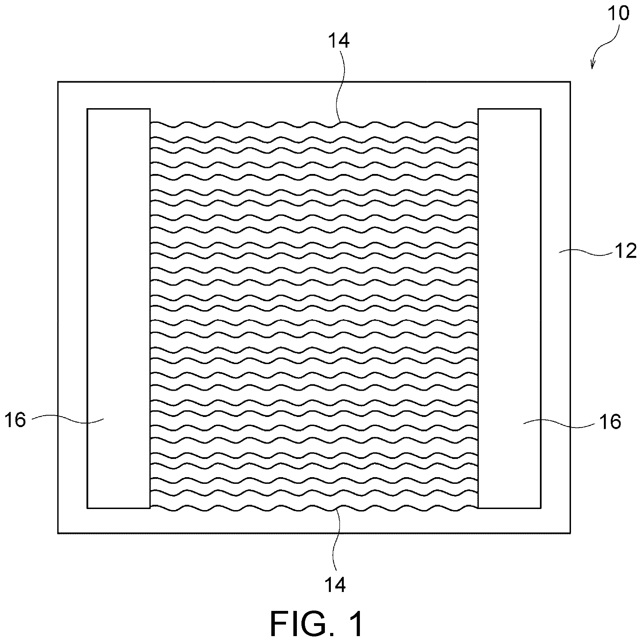

Figure 1 is a schematic top view showing an example of a heating element of the present invention and is a diagram viewed from the surface of a resin film on the side where heating wires are provided.

### DESCRIPTION OF EMBODIMENTS

### Heating Element

Figure 1 shows an example of a heating element of the present invention. A heating element 10 shown in Figure 1 comprises a resin film 12 and heating wires 14. The heating wires 14 comprise a copper wire and are provided on at least one surface of the resin film 12. Copper crystal grains forming the copper wire has a cross-sectional crystal size of less than 1.5 µm. In the heating element 10 comprising the copper wire, the controlling the cross-sectional crystal size of copper crystal grains forming the copper wire to less than 1.5 µm in this way makes it possible to suppress the rapid temperature rise even when the supply voltage is high.

The mechanism is not necessarily certain but is considered to be due to the fact that by decreasing the cross-sectional crystal size of the copper crystal grains to less than 1.5 µm, the thermal diffusion at the grain boundaries is suppressed to shift the resistance. Here, calorific value W is proportional to the square of voltage V and inversely proportional to resistance R (W = V²/R), and, for example, when a conventional defroster for a voltage of 12 V is applied to a vehicle where supply voltage to electrical parts is high, as high as 48 V, calorific value W of the defroster is 16 times larger and therefore a concern over the rapid temperature rise arises. Therefore, high resistance R is required for a defroster for a vehicle where the supply voltage to electrical parts is high. In this respect, it is conceivable to increase resistance R by, for example, decreasing the cross-sectional area of the heating wires to 1/16 of the cross-sectional area of conventional heating wires, but in such a case, the design of the heating wires is restricted, such as extremely reducing the height and line width of the heating wires. In contrast, in the heating element 10 of the present invention, even when the cross-sectional area of the heating wires 14 is constant, the cross-sectional crystal size of the copper crystal grains is controlled to be small to increase resistance R and, as a result, make it possible to decrease calorific value W. As just described above, the heating element 10 makes it possible to control calorific value W by making use of the characteristics of the copper wire included in the heating wires 14 and therefore also has an advantage that the degree of freedom in designing the heating wires 14 themselves can be ensured.

The copper crystal grains forming the copper wire has a cross-sectional crystal size of less than 1.5 µm, preferably 0.1 µm or more and 1.5 µm or less, more preferably 0.1 µm or more and 1.0 µm or less, and further preferably 0.2 µm or more and 0.5 µm or less. Thus, the rapid temperature rise of the heating element 10 can be suppressed much more effectively. The cross-sectional crystal size herein means the average crystal grain size in the cross-sectional direction of the copper wire. Specifically, the cross-sectional crystal size refers to a value obtained by analyzing a cross section of the copper wire in the thickness direction (height direction) by electron backscattering diffraction (EBSD). When the heating element 10 comprises another part (for example, a bus bar 16 in Figure 1) having the same crystal structure as the copper crystal grains forming the copper wire, the cross-sectional crystal size may be specified by subjecting a cross section of the above-described part instead of the copper wire to the EBSD analysis. The cross-sectional crystal size can be preferably calculated according to the procedure which will be described later in Evaluation (4a) in Examples.

The copper wire is formed of copper but may comprise: a different metal; an additive component and inevitable impurities derived from the raw materials; and the like. The content of copper in the copper wire is preferably 55 atomic % or more and 100 atomic % or less, and more preferably 90 atomic % or more and 100 atomic % or less. The content is defined as a semiquantitative value obtained through measurement with a scanning electron microscope with an energy dispersive X-ray spectrophotometer (SEM-EDS) after subjecting the heating wires 14 to cross-section processing. However, if vapor deposition is performed at the time of observation, platinum or gold is used, and the deposited element is excluded in calculating the semiquantitative value. The heating wires 14 may comprise a known additive or the like in addition to the copper wire and may be heating wires each obtained by subjecting a copper wire to, for example, coating in order to impart a desired function (for example, waterproofness and electrical insulation).

Each of the heating wires 14 preferably has a thickness (height) of 0.1 µm or more and 70 µm or less, more preferably 0.5 µm or more and 18 µm or less, further preferably 0.5 µm or more and 5 µm or less, and particularly preferably 1 µm or more and 3 µm or less. Thus, the rapid temperature rise of the heating element 10 can be suppressed much more effectively while the manufacturing is easy.

Each of the heating wires 14 preferably has a line width of 1 µm or more and 30 µm or less, more preferably 1 µm or more and 20 µm or less, further preferably 3 µm or more and 15 µm or less, and particularly preferably 3 µm or more and 10 µm or less. Thus, the rapid temperature rise of the heating element 10 can be suppressed much more effectively, and a good visibility can be ensured when the heating element 10 is used as a defroster, while the manufacturing is easy. The heating wires 14 may be provided into a pattern, such as a lattice shape, where the heating wires intersect with each other. In this case, the parts where the heating wires 14 intersect with each other are excluded from the calculation of the line width.

The heating wires 14 preferably include at least one pattern selected from the group consisting of linear-shaped, wavy line-shaped, lattice-shaped, and net-shaped patterns, and more preferably includes a wavy line-shaped pattern. The length of each heating wire 14 may be determined appropriately according to the pattern shape of the heating wires 14, the size of the object (such as window glass of a vehicle) where the heating element 10 is used, and the like, and is not limited.

When the heating element 10 is used for a laminated glass or a defroster, the resin film 12 functions as a glass intermediate film. From this viewpoint, the resin film 12 is preferably formed of a resin having light permeability, and examples of such a resin include polyvinyl acetal resins, polyurethane resins, and ethylene-vinyl acetate copolymers. The resin film 12 more preferably comprises a polyvinyl acetal resin. Preferred examples of the polyvinyl acetal resin contained in the resin film 12 include polyvinyl butyral resins in view of penetration and impact resistance, transparency, and the like as a glass intermediate film. The resin film 12 may comprise a known additive, and examples of the additive that can be contained in the resin film 12 include a plasticizer, an antioxidant, an ultraviolet absorber, and an adhesion control agent. In any case, as the resin film 12, a commercially available resin film (for example, a polyvinyl acetal resin film) may be used as it is, or the resin film 12 may be produced by employing an already known method for manufacturing a resin film (see, for example, Patent Literatures 2 and 3) without a modification or appropriately modifying the method.

The resin film 12 preferably has a thickness of 1 µm or more and 1,000 µm or less, more preferably 10 µm or more and 900 µm or less, and further preferably 80 µm or more and 900 µm or less, although not limited thereto. When the thickness of the resin film is within the ranges, good light permeability and feedability (that is, supportability to the heating wires 14) can be achieved.

In the heating element 10, the proportion of the regions where the resin film 12 and the heating wires 14 are not in contact in the surface of the resin film 12 on the heating wire 14 side (that is, aperture ratio) is preferably 70% or more and 98% or less. Thus, a much better visibility can be ensured.

The heating element 10 may further comprise an additional resin film (not shown) in addition to the resin film 12. In this case, the heating wires 14 are preferably sandwiched between the additional resin film and the resin film 12. Thus, the penetration and impact resistance of the heating element 10 can be improved much more.

As shown in Figure 1, the heating element 10 may further comprise bus bars 16, wherein the heating wires 14 are connected to each bus bar 16. Each of the bus bars 16 may be produced using the same raw material (such as a copper foil) as that for the heating wire 14 through the same processes as those for the heating wire 14, and therefore may have the same crystal structure as that of the copper crystal grains forming the copper wire included in the heating wire 14.

### Method for Manufacturing Heating Element

The method for manufacturing the heating element 10 is not limited, and the heating element 10 can be manufactured by appropriately changing the conditions in already known methods for manufacturing a heating element and a defroster. For example, the heating element 10 can be preferably manufactured by (1) providing a copper foil having a predetermined cross-sectional crystal size, (2) bonding or forming a resin film onto the copper foil, and (3) processing the copper foil to form heating wires in a predetermined pattern. Hereinafter, each of the steps (1) to (3) will be described.

### (1) Providing Copper Foil

A copper foil in which copper crystal grains have a cross-sectional crystal size of less than 1.5 µm is provided. The copper foil may be any of an electrodeposited copper foil and a rolled copper foil but is preferably an electrodeposited copper foil. When an electrodeposited copper foil is manufactured, the cross-sectional crystal size can be controlled by changing the additive concentration, the current density, and the like in forming the copper foil by electrodeposition. Alternatively, a commercially available copper foil satisfying the above-described range of the cross-sectional crystal size may be selected.

The copper foil may be a copper foil as formed by electrodeposition or rolling foil production (that is, a raw foil) or may take a form of a surface-treated copper foil obtained by subjecting at least any one of the surfaces of a copper foil to surface treatment. The surface treatment can be any of various types of surface treatment which are performed in order to improve or impart a certain characteristic (for example, rust proofing performance, humidity resistance, chemical resistance, acid resistance, heat resistance, and adhesion to a resin film) in a surface of the copper foil. At least one surface of the copper foil may be subjected to the surface treatment or both surfaces of the copper foil may be subjected to the surface treatment. Examples of the surface treatment to which the copper foil is subjected include rust proofing treatment, silane treatment, roughening treatment, and barrier-forming treatment. Further, the copper foil may take a form of a carrier-attached copper foil comprising a carrier and a release layer in order to improving handleability.

An electrodeposited copper foil has a characteristic that as electrodeposited copper is deposited in the thickness direction during the copper foil production, the size of copper crystal grains becomes larger. In other words, the size of the copper crystal grains at one surface and its vicinity of the electrodeposited copper foil and the size of the copper crystal grains at the other surface and its vicinity of the electrodeposited copper foil are generally different. Accordingly, by performing etching from one surface of the electrodeposited copper foil, copper crystal grains having a larger crystal size (or a smaller crystal size) can be removed selectively. A copper foil in which copper crystal grains have a predetermined cross-sectional crystal size may be provided in this way. The copper foil may be etched after the resin film 12 is, as will be described later, bonded or formed onto the copper foil, and in such a case, the cross-sectional crystal size of the copper crystal grains forming the copper foil after the etching may be within the predetermined range.

### (2) Bonding or Forming Resin Film onto Copper Foil

The resin film 12 is bonded or formed onto the copper foil provided in (1) to form a laminate. The resin film 12 is preferably bonded to the copper foil by thermocompression bonding or adhesion of the preliminarily provided resin film 12 to the copper foil. The temperature and pressure during the thermocompression bonding is not limited and may be determined appropriately according to the type of resin for forming the resin film 12.

On the other hand, the resin film 12 is preferably formed on the copper foil by coating the copper foil with a resin composition for forming the resin film 12 or applying a resin composition for forming the resin film 12 on the copper foil using a known method, such as a melt extrusion method, a casting method, and a coating method. Thus, the resin film 12 can be formed directly (formed in-situ) on the copper foil.

When an electrodeposited copper foil is used, the resin film 12 is preferably bonded or formed onto the copper foil so as to make the copper crystal grain size at the surface of the electrodeposited copper foil where the resin film 12 is adhered and its vicinity smaller than the copper crystal grain size at the opposite side of the surface and its vicinity. Thus, the copper crystal grains having smaller cross-sectional crystal sizes are left when the copper foil is etched from the opposite side of the surface where the resin film 12 is adhered. However, this does not apply to the case when the copper foil is not etched, the resin film 12 may be bonded or formed onto any of the surfaces of the electrodeposited copper foil.

### (3) Processing Copper Foil

The copper foil is processed to provide the heating element 10 wherein the heating wires 14 and, optionally, bus bars 16 are formed on the surface of the resin film 12. The copper foil may be processed according to any of the known processes, and the process is not limited. For example, the heating wires 14 whose shape is a predetermined pattern and, optionally, the bus bars 16 can be formed by a process such as a subtractive process, a semi-additive process, or a modified semi-additive process, as disclosed in Patent Literature 4.

An additional resin film is optionally bonded or formed onto the heating element 10 so as to sandwich the formed heating wires 14. Bonding or formation of the additional resin film is not limited and may be performed in accordance with, for example, the above-described bonding or formation of the resin film 12 onto the copper foil.

### Laminated Glass

The heating element 10 is preferably used for a laminated glass. Specifically, according to a preferred aspect of the present invention, there is provided a laminated glass comprising a pair of glass sheets and the heating element 10 sandwiched between the glass sheets.

The configuration of the laminated glass is not limited, and known configurations can be employed except that the laminated glass comprises the above-described heating element 10. The heating element 10 may be one such that the heating wires 14 are disposed so as to run over the whole surfaces of the glass sheets, or may be one such that the heating wires 14 are disposed so as to be provided in only a particular region of the glass sheets. The glass sheet is not limited, and, for example, commercially available glass for a vehicle can be employed as the glass sheet.

### Defroster

The heating element 10 and the laminated glass comprising the heating element 10 are preferably used for a defroster. Specifically, according to a preferred aspect of the present invention, there is provided a defroster comprising the above-described laminated glass and a voltage supply unit connected to the laminated glass and capable of applying a voltage to the heating element 10.

The configuration of the defroster is not limited, and known configurations can be employed except that the defroster comprises the above-described heating element 10. When the heating element 10 comprises the above-described bus bar 16, the bus bar 16 and the voltage supply unit (such as an external power supply) are preferably connected electrically.

The defroster is preferably used for a vehicle where supply voltage to electrical parts is 24 V or more (for example, about 48 V). According to the defroster of the present invention, the rapid temperature rise can be suppressed even when the supply voltage to electrical parts is higher in a vehicle, such as a mild hybrid vehicle, than that in conventional vehicles. As a result, the window glass and the like in a vehicle can be warmed appropriately, so that frost, ice, fog, or the like can be prevented or removed.

### EXAMPLES

The present invention will be more specifically described by the following examples.

### Examples 1 to 4

Four types of copper foils were provided, and a resin film was bonded to these copper foils to provide laminates. Heating elements were produced by processing the obtained laminates and evaluations were conducted. Specifically, the procedures were as follows.

### (1) Providing Copper Foils

In Examples 1 to 3, commercially available copper foils (electrodeposited copper foils, thickness 12 µm) each having a cross-sectional crystal size shown in Table 1 were provided. The cross-sectional crystal sizes of the copper foils shown in Table 1 were calculated through the measurement by the same method as in evaluation (4a) except that observation conditions (the width and height in the measurement region) using a scanning electron microscope were changed for the laminates before adjusting the thickness by etching as will be described later.

On the other hand, in Example 4, there was provided a commercially available carrier-attached copper foil including a carrier, a release layer, and a superthin copper foil (electrodeposited copper foil) having a thickness of 2 µm.

### (2) Bonding Resin Film to Copper Foil

A commercially available polyvinyl butyral resin film (thickness: 760 µm) in which adipic acid dihexyl ester is blended as a plasticizer was provided. The polyvinyl butyral resin film and the copper foils provided in (1) were laminated. At this time, in Example 4, the resin film was laminated such that the surface of the superthin copper foil came into contact with the resin film. The copper foil and the resin film were subjected to thermocompression bonding under the conditions of a temperature of 110°C, a pressure of 0.4 MPa, and a time of 20 seconds or shorter to provide a laminate in which the copper foil and the resin film were bonded. Thereafter, in Examples 1 to 3, the surface of the laminate on the copper foil side was etched with dilute sulfuric acid until the thickness of the copper foil reached 2 µm. On the other hand, in Example 4, the carrier was released from the laminate after the thermocompression bonding.

### (3) Producing Heating Element

A circuit was formed by a subtractive process on the laminate after the etching or after releasing the carrier to produce a heating element 10 in which heating wires 14 and bus bars 16 were provided on one surface of the resin film 12 as shown in Figure 1. Specifically, a dry film was bonded to the surface of the laminate on the copper foil side to form an etching resist layer. Then, this etching resist layer was exposed and developed to form a predetermined etching pattern. Thereafter, etching was performed with a copper etchant to strip the etching resist. Thus, 67 wavy line-shaped heating wires 14 each connected to the bus bars 16 and having a height of 2 µm, a line width of 30 µm, and a length of 8 cm were formed to provide the heating element 10.

### (4) Evaluation

The characteristics of the heating element thus obtained were evaluated as follows.

### (4a) Measurement of Cross-Sectional Crystal Size

The cross-sectional crystal size of copper crystal grains forming the copper wires was measured as follows using the obtained heating element 10. Firstly, cross section processing with a cross section polisher (CP) was performed from the surface of the heating element 10 on the heating wire 14 and bus bar 16 side along the thickness direction under a condition of an acceleration voltage of 5 kV. Thereafter, the cross section of the heating wires 14 was observed with an FE gun scanning electron microscope (manufactured by Carl Zeiss AG, Crossbeam 540) equipped with an EBSD detector (manufactured by Oxford Instruments, Symmetry). EBSD data were acquired using EBSD measurement software (manufactured by Oxford Instruments, Aztec 5.0 HF1), and the acquired EBSD data were converted into the OIM format. Measurement conditions for the scanning electron microscope during the observation were set as follows. However, with regard to the observation conditions such as the region width and the region height of the following conditions, appropriate values can be selected according to the size of the heating element 10 and/or the heating wires 14.

### <Measurement Conditions for Scanning Electron Microscope>

- Acceleration Voltage: 10.00 kV
- Step Size: 10 nm
- Region Width: 5.86 µm
- Region Height: 4.4 µm
- Scan Phase: Cu
- Sample Angle: 70°

The crystal distribution was measured using crystal size calculation software (manufactured by AMTEK, Inc., OIM Analysis v7.3.1 x64) based on the data converted into the OIM format to calculate the cross-sectional crystal size (average crystal size, "Grain Size-Average Area" on the software) of the copper crystal grains forming the copper wires and the bus bars 16. The results were as shown in Table 1. In the measurement of the crystal distribution, an orientation difference of 5° or more was regarded as a crystal grain boundary. However, the crystal structure of copper is a cubic crystal structure, and therefore the following (i) or (ii) was not regarded as a crystal grain boundary considering twin boundaries.
(i) A twin boundary where the orientational relationship is 60° rotation around the <111> axis
(ii) A twin boundary where the orientational relationship is 38.9° rotation around the <110> axis

### (4b) Measurement of Temperature Increasing Rate

The temperature increasing rate was measured as follows using the obtained heating element 10. Firstly, the heating element 10 was placed on a workbench under a room temperature environment (about 25°C) in such a manner that the heating wires 14 faced toward the outside, and a power source (the voltage supply unit) was connected to the bus bars 16. An infrared thermography camera (manufactured by FLIR Systems Inc., FLlR C3) was adjusted in such a manner that the whole heating element 10 fell within the visual field for measurement, and then box measurement to show the minimum temperature and the maximum temperature in the visual field for measurement was performed to read the maximum temperature of the heating element 10. Thereafter, a voltage of 1.5 V was applied to the heating element 10 from the power source for 1 minute to increase the temperature of the heating element 10. The maximum temperature of the heating element 10 one minute after the application of the voltage was read with the infrared thermography camera in the same manner as before the application of the voltage. The difference in the maximum temperature of the heating element 10 before and after the application of the voltage was defined as increased temperature. The above operation was performed twice for each example to calculate the average value of the increased temperature. The results were as shown in Table 1.

### [Table 1]

**Table 1**

| | Copper foil | | Evaluations of heating element | |
|---|---|---|---|---|
| | Thickness | Cross-sectional crystal size before etching (µm) | Cross-sectional crystal size (µm) | Increased temperature (°C) after a voltage of 1.5 V is applied for 1 minute |
| Example 1* | 12 | 3.36 | 1.61 | 15.1 |
| Example 2 | 12 | 1.67 | 1.30 | 14.5 |
| Example 3 | 12 | 1.35 | 0.87 | 12.5 |
| Example 4 | 2 | - | 0.35 | 9.8 |

| | | | | |
|---|---|---|---|---|
| * indicates a comparative example. | | | | |

## Claims

1. A heating element comprising:
a resin film; and
heating wires provided on at least one surface of the resin film and comprising a copper wire,
wherein copper crystal grains forming the copper wire have a cross-sectional crystal size of less than 1.5 µm.

2. The heating element according to claim 1, wherein each of the heating wires has a thickness of 70 µm or less.

3. The heating element according to claim 1 or 2, wherein each of the heating wires has a line width of 1 µm or more and 30 µm or less.

4. The heating element according to claim 1 or 2, wherein the heating wires are provided into at least one pattern selected from the group consisting of linear-shaped, wavy line-shaped, lattice-shaped, and net-shaped patterns.

5. The heating element according to claim 1 or 2, wherein the resin film has a thickness of 1 µm or more and 1,000 µm or less.

6. The heating element according to claim 1 or 2, wherein the resin film comprises a polyvinyl acetal resin.

7. The heating element according to claim 6, wherein the polyvinyl acetal resin is a polyvinyl butyral resin.

8. The heating element according to claim 1 or 2, further comprising an additional resin film, wherein the heating wires are sandwiched between the additional resin film and the resin film.

9. A laminated glass comprising:
a pair of glass sheets; and
the heating element according to claim 1 or 2 sandwiched between the pair of glass sheets.

10. A defroster comprising:
the laminated glass according to claim 9; and
a voltage supply unit connected to the laminated glass and capable of applying voltage to the heating element.

11. The defroster according to claim 10, to be used for a vehicle in which a supply voltage to electrical parts is 24 V or more.
